# EUROPEAN PATENT APPLICATION

(11) **EP 2 851 577 A1**
(43) Date of publication of application: **25.03.2015**
(21) Application number: 13185711.2
(22) Date of filing: 24.09.2013
(51) Int. Cl.: F16D 43/286

(54) **Hydrostatic overload clutch**

(71) Applicant: Volvo Car Corporation, 40 531 Göteborg (SE)
(72) Inventor: Forssell, Jonas, 42363 Torslanda (SE); Odenmarck, Christer, 42361 Torslanda (SE); Almhagen, Petter, 44831 Floda (SE)
(74) Representative: Kraenzmer, Martin

(57) **Abstract**

Hydrostatic overload clutch (HO-clutch) (10; 40), the HO-clutch (10; 40) comprises;
• a housing (21; 41),
• torque input means (22; 42),
• torque output means (23; 43), and
• a first and a second pressure chamber (25, 26; 45, 52) adapted to be filled with a pressure medium,

wherein the first and second pressure chamber (25, 26; 45, 52) are interconnected through at least a first channel (11 ; 54) and is arranged in one of the input and output means (22, 23; 42, 43), wherein the input means (22; 42) is adapted to interact with the first pressure chamber (25; 45) such, that by applying a torque onto the input means (22; 42) a pressure can be raised in the first pressure chamber (25; 45)
characterised in, that
a first one-way relief valve (13; 56) is arranged in the first channel (11; 54), wherein the first one-way relief valve (13; 56) is adapted to open when a first pressure (p1) in the first pressure chamber (25; 45) rises above a first predetermined threshold pressure, whereby the torque can be transferred to the torque output means (23; 43) as long as the first pressure (p1) is held below the first predetermined threshold pressure.

## Description

### TECHNICAL FIELD

The present invention relates to an over load clutch and especially to a hydrostatic overload clutch.

### BACKGROUND ART

Overload clutches of various kinds are previously known in the art. When transferring a torque over the overload clutch, the over load clutch is designed such that when the input torque exceeds a predetermined threshold torque, the clutch releases such that no torque can be transferred. A device arranged after the over load clutch is thereby protected against high torques that might damaged the device.

As overload clutches are commonly friction clutches used. A friction clutch has a hysteresis behaviour, i.e. when they are at slip, they do not start to slip at the same torque as they stick when they already are slipping. Other known solutions such as spring loaded overload clutches has problem with a limited opening angle.

Hence, there are a need for an improved overload clutch, which reduces the afore mentioned problems.

### SUMMARY

The object of the present invention is to provide an inventive overload clutch, which is robust and compact in its design and still withstands high torques. This object is achieved by the overload clutch defined by the features of claim 1.

The invention is based upon the idea of a hydrostatic overload clutch, which comprises:
- a housing,
- torque input means,
- torque output means, and
- a first and a second pressure chamber adapted to be filled with a pressure medium.

The first and second pressure chambers are interconnected through at least a first channel such, that the pressure medium can flow there between through said channel. Both the pressure chambers are arranged in one of the input and output means. The input means is adapted to interact with the first pressure chamber such, that by applying a torque onto the input means a pressure can be raised in the first pressure chamber, whereby as long as the pressure is upheld the applied torque can be transferred to the output means.

The invention is **characterised in that** a first one-way relief valve is arranged in the first channel, wherein the first one-way relief valve is adapted to open when a first pressure in the first pressure chamber rises above a first predetermined threshold pressure, whereby the torque can be transferred to the torque output means as long as the first pressure is held below the first predetermined threshold pressure.

The pressure chambers of the invention are adapted to be filled with a pressure medium, such as oil.

The torque is transferred between from the input means to the output means over a hydrostatic pressure in the first pressure chamber. As long as the first on-way relief valve is closed, no pressure medium can flow out from the first pressure chamber, whereby a torque can be transferred. However, when the first one-way relief valve opens, the pressure fluid is able to flow out from the first pressure chamber into the second pressure chamber, whereby the HO-clutch opens and the first input means is able to rotate relative said second input means. The first one-way relief valve opens at a predetermined torque limit corresponding to a predetermined threshold pressure in the first pressure chamber. A balance arises between the one-way relief valve and the pressure in the first pressure chamber, whereby the clutch keeps transferring torque to the output means, however just torque up to the predetermined torque limit where the first one-way valve opens.

It is preferred that the whole device is arranged within the same housing, whereby the housing preferably also comprises the first and the second pressure chamber and the first channel. This ensures that the device is compact while still being able to handle high torques.

It is also preferred that the torque output means is attached to the housing or that it is a part of the housing, whereby the housing rotates together with the torque output means.

It is further preferred that the inventive HO-clutch is provided with an impulse damper. The impulse damper is adapted to absorb high torque impulses transferred from the input means.

One such impulse damper comprises a gas filled, and compressible reservoir arranged interconnected with the closed fluid cycle, sudden pressure impulses will thereby be absorbed in that the reservoir is expanding.

Alternatively or additionally to the impulse damper air or another gas can be dissolved in the pressure medium. The air/gas dissolved in the pressure medium gives the pressure medium dampening characteristics, because the air/gas can be compressed.

In a first embodiment of the invention, the HO-clutch comprises a differential pump provided with a housing, torque input means, torque output means and a pumping mechanism, which pumping mechanism is arranged within the housing and between the torque input means and the torque output means. The pumping mechanism is provided with at least a first and a second pressure chamber, which are interconnected through a first channel such that a pumping fluid can be pumped between the first and the second chamber in a closed fluid cycle when the input and the output means rotates with different rotational speeds.

The first one-way relief valve is arranged in the first channel, wherein the first one-way relief valve is adapted to open when the pressure in the first pressure chamber rises above a first predetermined threshold pressure.

When transferring a torque over the overload clutch, the input means is exercising a torque upon the pumping mechanism, whereby a pressure rises in one of the pressure chambers, dependent on the direction of the torque. When the torque is directed such that the first pressure chamber is the high pressure chamber, the high pressure will act against the closing mechanism in the first one-way relief valve. As long as the pressure in the first pressure chamber does not exceed the first predetermined threshold pressure, the full torque will be transferred to the output means. However, the first one-way relief valve will open when the high pressure exceeds the first predetermined threshold pressure, i.e. the overload clutch opens and only torque up to the predetermined torque limit corresponding to the first predetermined threshold pressure can be transferred to the output means. Normally the one-way relief valve is a spring loaded relief valve, whereby the torque that the HO-clutch is able to transfer is dependent on the spring load exerted by the spring in the one-way relief valve. If the torque is directed in the opposite direction, the second pressure chamber will be the high pressure chamber, whereby the HO-clutch won't be able to open, i.e. the HO-clutch cannot open when torque is transmitted in this direction. Thus, in theory unlimited torque can be transferred in this direction.

An HO-clutch according to the first embodiment of the invention is compact and robust in its design and is still able to transfer high torques. By using a spring loaded relief valve, no sensors are required for the HO-clutch to function, which makes the HO-clutch cost effective.

The first embodiment of the HO-clutch can further be provided with a second one-way relief valve arranged in a second channel, which also connects the first and the second pressure chamber. The second one-way relief valve is adapted to open when a second pressure in the second pressure chamber exceeds a second predetermined threshold pressure. The second one-way valve is used when the HO-clutch operates in an opposite direction than in the case with only a first one-way valve. Because the second one-way relief valve is arranged in the second channel and is adapted to let pressure fluid through from the second to the first pressure chamber of the pumping mechanism, the HO-clutch becomes a two-way overload clutch, which can release at different or the same torques value for the two rotation directions dependent on how the opening pressures are defined for the first and the second one-way relief valve. The opening pressure for the first and the second relief valve can be set independently of each other. Either is first and the second predetermined threshold pressure equal or one of the first and the second predetermined threshold pressure is higher than the other.

In a second embodiment of the invention the HO-clutch one of the torque input and output means is connected to a camshaft and the other of the torque input and output means is connected to the housing. The camshaft is rotatable mounted in the housing and interacts with the first pressure chamber over a plunger such that the plunger can be pressed into the first pressure chamber by rotation of the camshaft.

In the second embodiment of the invention the camshaft interacts with at least the first pressure chamber over the plunger. As long as the first one-way relief valve is closed the plunger cannot be substantially pressed into the first pressure chamber, whereby the plunger prevents a rotation of the camshaft relative the housing. A torque can consequently be transferred from the input means to the output means due to the hydrostatic pressure in the first pressure chamber. This alternative embodiment of the invention has the same release properties in both rotational directions.

The camshaft is preferably arranged such that it interacts with the plunger in the second pressure chamber. The second embodiment of the inventive OH-clutch can thereby be sealed conveniently, because the first pressure chamber, which is a high pressure chamber, is sealed to the second pressure chamber, at the relief valve and at the plunger. Any leakages from the high pressure first chamber occur to the second pressure chamber, which always is a low pressure chamber in the second embodiment of the invention. The second pressure chamber is only a low pressure chamber and is easily sealed to the ambient with an o-ring between the input shaft and the housing.

The plunger is preferably adapted to be a pressure nail, having a small surface in its working direction. The camshaft is acting upon at least one pressure nail, which thereby is forced into the first pressure chamber. By having a small surface in the working direction the first pressure chamber can be made small, whereby the whole HO-clutch can be made small and compact, whereby it still can transfer high torques.

The plunger preferably is a spring loaded plunger adapted to act upon the camshaft with a predetermined force. Having a spring loaded plunger further ensures that the plunger is forced back to its desired position after the camshaft has pressed the plunger into the first pressure chamber.

The plunger is provided with a head, which is adapted to act upon the camshaft, wherein the head is provided as ball or cylinder, which is arranged in the plunger such that it can rotate. This ensures a low friction contact between the camshaft and the plunger, giving low friction losses and reduces wear on the camshaft and the head of the plunger.

It is foreseen that the second embodiment of the HO-clutch is provided with a plurality of plungers and pressure chambers. The plurality of plungers can interact with the same cam or at different cams upon the camshaft.

### BRIEF DESCRIPTION OF THE DRAWINGS

The present invention will now be described in detail with reference to the figures, wherein:
Figure 1 schematically shows a first embodiment of a hydrostatic overload clutch according to the invention;
Figure 2 schematically shows a second embodiment of a hydrostatic overload clutch according to the invention.

### DETAILED DESCRIPTION

In the following two embodiments of the invention is shown and described, simply by way of illustration of two modes of carrying out the invention.

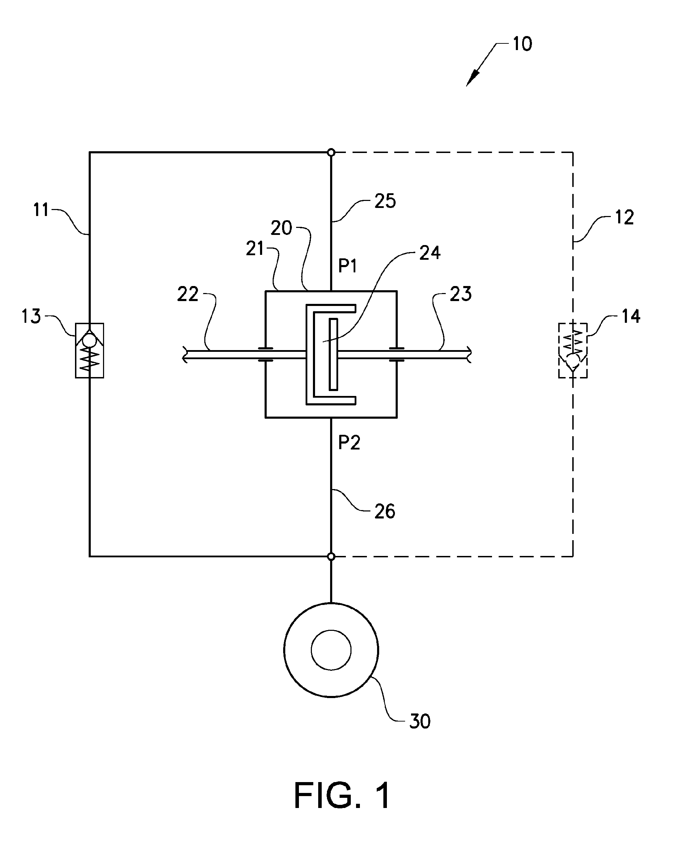

Figure 1 schematically shows a first embodiment of the hydrostatic overload clutch (HO-clutch) 10 according to the invention. The HO-clutch 10 comprises a differential pump 20. The differential pump 20 comprises a housing 21, torque input means 22, and torque output means 23. A pumping mechanism 24 is arranged within the housing 21 and between the torque input means 22 and the output means 23. The pumping mechanism 24 is provided with at least a first pressure chamber 25 and a second pressure chamber 26 which are interconnected through at least a first channel 11. A pressure fluid can be pumped between the first chamber 25 and the second chamber 26 in a closed fluid cycle when the torque input means 22 and the torque output means 23 rotates with different rotational speeds.

In a first working direction a pressure P1 in the first pressure chamber 25 is higher than a second pressure P2 in the second pressure chamber 26, i.e. a pumping direction of the differential pump 10 is from the first pressure chamber 25 to the second pressure chamber 26.

A first one-way relief valve 13 is arranged in the first channel 11. The first one-way relief valve 13 is adapted to open when the first pressure P1 in the first pressure chamber 25 rises above a first predetermined threshold pressure. The first one-way relief valve 13 is preferably a spring loaded valve. The force required to release the spring of the valve 13 determines the threshold pressure. As long as the first one-way relief valve is closed

In figure 1 a second channel 12 having a second one-way relief valve 14 arranged therein is shown with dotted lines. This indicates that this is an optional solution and provides the function that the HO-clutch is provided with a release function or freewheel function in a second working direction opposite the first working direction. In the second working direction a pressure P1 in the first pressure chamber 25 is lower than a second pressure P2 in the second pressure chamber 26, i.e. a pumping direction of the differential pump 10 is from the second pressure chamber 26 to the first pressure chamber 25. The second one-way relief valve 14 is adapted to open when a second pressure P2 in the second pressure chamber 26 rises above a second predetermined threshold pressure. The first and second one-way relief valves may be of the same kind or of different kinds. The first predetermined threshold pressure may be the same or different from the second predetermined threshold pressure.

The HO-clutch in figure 1 also comprises an impulse damper 30 connected to the first channel 11 and, in the case of the HO-clutch having a second channel 12, connected also to the second channel 12. The impulse damper 30 is a pressure fluid filled reservoir. The reservoir is either in its self stretchable or comprises a stretchable/compressible gas filled second reservoir. The flexibility of the reservoir/the second reservoir ensures that pressure spikes/impulses lead into the input means 22 can be absorbed by the system and thereby not transferred to the output means 23.

As an alternative to the impulse damper 30, a gas can be dissolved in the pressure medium. The dissolved gas can thereby be compressed, whereby the pressure medium can be compressed due to the compression of dissolved gas. Consequently, the pressure medium can in itself act as an impulse damper.

The pumping mechanism 24 can for instance be realized by means of a gerotor or a vane pump. However, other alternatives could be a swash plate pump or a radial piston pump with commutation valves.

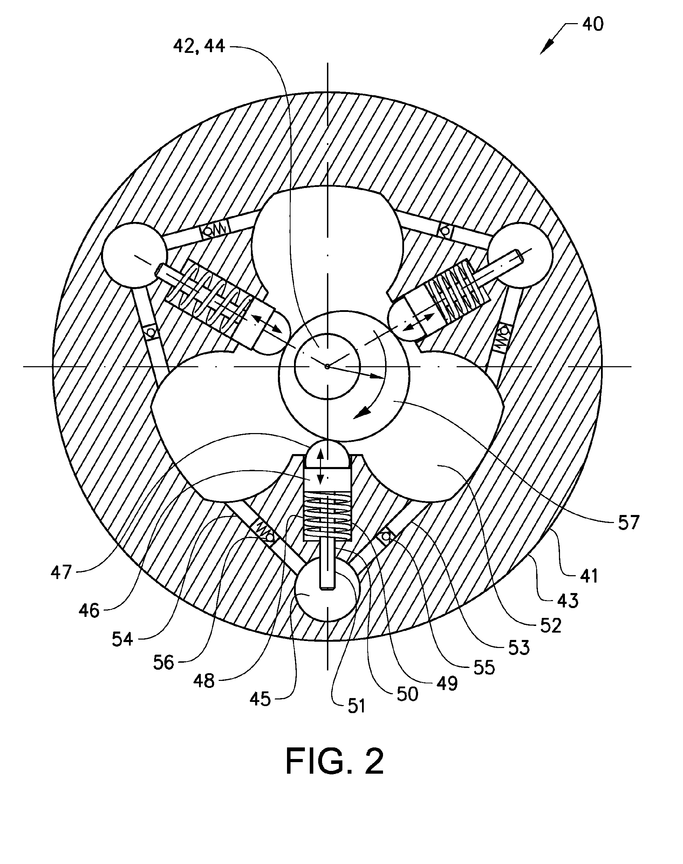

Figure 2 schematically shows a cross sectional view of a second embodiment of an HO-clutch 40 according to the invention.

The second HO-clutch 40 according to the invention comprises a housing 41, a camshaft 44, a torque input means 42 and a torque output means 43. One of the torque input and output means 42; 43 is connected to the camshaft 44, and the other of the torque input and output means 42; 43 is connected to the housing 41. The housing 41 is provided with at least one first pressure chamber 45 filled with a pressure medium. The camshaft 44 is rotatable mounted in the housing 41 and interacts with the first pressure chamber 45 over a plunger 46 such that the plunger 46 can be pressed into the first pressure chamber 45 by rotation of the camshaft 44.

The plunger 46 is provided with a head 47, which is adapted to act upon the camshaft 44. The head 47 is provided as a ball or a cylinder, which is seated in the plunger 46 such that it can rotate in its seat. The plunger 46 is further positioned in a plunger channel 48, and is preferably spring loaded by spring 49 positioned in the plunger channel 48. The plunger 46 protrudes into the first pressure chamber 45 such, that at least the end 51 of the plunger 46 extends into the first pressure chamber 45.

The first pressure chamber 45 is interconnected with a second pressure chamber 52 through a first channel 54 and second channel 53. The first channel 54 is provided with a first one-way relief valve 56 adapted to open at a predetermined threshold pressure within the first pressure chamber 54 and thereby letting pressure medium out in the second pressure chamber 52. The first pressure chamber 45 may take any suitable shape. The second channel 53 is provided with a second one-way valve 55 only letting pressure medium into the first pressure chamber 45. The second one-way valve 55 is preferably letting pressure medium flow from the second pressure chamber 52 to the first pressure chamber 45 already at very small over pressure in the second pressure chamber 52. The second one-way valve is preferably design such that, it lets pressure medium flow from the second pressure chamber 52 to the first pressure chamber 45 until the pressure in the first pressure chamber 45 is equal to the pressure in the second pressure chamber 52.

In figure 2, three first pressure chambers 45 are illustrated in order for the HO-clutch 40 to experience a more even load during operation. An HO-clutch according to the alternative embodiment may of course have fewer or more first pressure chambers.

The function of the second embodiment of the invention is described below. Upon rotation of the camshaft 44 a cam 57 of the camshaft 44 interacts with the first pressure chamber 45 such, that the cam 57 presses the plunger 46 into said first pressure chamber 45. When the plunger 46 is pressed into the first pressure chamber 45 the pressure medium in the first pressure chamber 45 is compressed, thereby increasing the pressure exerted on the cam 57 of the camshaft 44 by the plunger 46. The increased pressure in the first pressure chamber 45 increases the rotational resistance as it becomes harder to press the plunger 46 into the first pressure chamber 45.

When the pressure in the first pressure chamber 45 rises above the third predetermined pressure, the one-way relief valve 56 opens, whereby pressure medium can flow out from the first pressure chamber 45 into the second pressure chamber 52. The pressure from the plunger 46 upon the cam 57 of the camshaft thereby decreases, whereby the camshaft 44 rotates and the torque transferred to the output means 43 is reduced. When the plunger 46 is retracted from the first pressure chamber 45, pressure medium from the second pressure chamber 52 will enter the first pressure chamber 45, due to the under pressure in the first pressure chamber 45 in relation to the second pressure chamber 52.

Each of the three first pressure chambers 45 in figure 2 are constructed in the same way having the same predetermined threshold pressure. For design purposes it is of course possible to have different threshold pressures for different first pressure chambers.

In figure 2 the camshaft 44 has a circular cam 57. The shape of the cam 57 may of course be of any suitable shape.

Reference signs mentioned in the claims should not be seen as limiting the extent of the matter protected by the claims, and their sole function is to make claims easier to understand.

As will be realised, the invention is capable of modification in various obvious respects, all without departing from the scope of the appended claims. Accordingly, the drawings and the description thereto are to be regarded as illustrative in nature, and not restrictive.

## Claims

1. Hydrostatic overload clutch (HO-clutch) (10; 40), the HO-clutch (10; 40) comprises;
• a housing (21; 41),
• torque input means (22; 42),
• torque output means (23; 43), and
• a first and a second pressure chamber (25, 26; 45, 52) adapted to be filled with a pressure medium,
wherein the first and second pressure chamber (25, 26; 45, 52) are interconnected through at least a first channel (11 ; 54) and is arranged in one of the input and output means (22, 23; 42, 43), wherein the input means (22; 42) is adapted to interact with the first pressure chamber (25; 45) such, that by applying a torque onto the input means (22; 42) a pressure can be raised in the first pressure chamber (25; 45)
**characterised in, that**
a first one-way relief valve (13; 56) is arranged in the first channel (11; 54), wherein the first one-way relief valve (13; 56) is adapted to open when a first pressure (p1) in the first pressure chamber (25; 45) rises above a first predetermined threshold pressure, whereby the torque can be transferred to the torque output means (23; 43) as long as the first pressure (p1) is held below the first predetermined threshold pressure.

2. Hydrostatic overload clutch (10; 40) according to claim 1, wherein the torque output means (23; 43) is attached to the housing (21).

3. Hydrostatic overload clutch (10, 40) according to any of the preceding claims 1 or 2, wherein the HO-clutch (10; 40) is provided with an impulse damper (30).

4. Hydrostatic overload clutch (10, 40) according to claim 3, wherein the impulse damper (30) comprises a gas filled and compressible reservoir arranged interconnected with the closed fluid cycle.

5. Hydrostatic overload clutch (10) according to any of the preceding claims, wherein the HO-clutch (10) comprises a differential pump (20) having;
• a pumping mechanism (24) arranged within the housing (21) and between the torque input means (22) and the output means (23), wherein
the pumping mechanism (24) comprises the first and a second pressure chamber (25, 26), which are interconnected through the first channel (11) such that a pumping fluid can be pumped between the first and the second chamber (25, 26) in a closed fluid cycle when the input and the output means (22, 23) rotates with different rotational speeds (ω1, ω2).

6. Hydrostatic overload clutch (10) according to any of the preceding claim 5, wherein the pumping mechanism (24) is further provided with a second channel (12) in which a second one-way relief valve (14) is arranged, wherein the second one-way relief valve (14) is adapted to open when a second pressure (p2) in the second pressure chamber (12) rises above a second predetermined threshold pressure.

7. Hydrostatic overload clutch (10) according to claim 6, wherein one of the first and second predetermined threshold pressure is higher than the other.

8. Hydrostatic overload clutch (10) according to any one of the preceding claims 5-7, wherein the first and second channel (11, 12) are arranged within the housing (21).

9. Hydrostatic overload clutch (40) according to any of the preceding claim 1-4, wherein one of the torque input and output means (42) is connected to a camshaft (44) and the other of the torque input and output means (43) is connected to the housing (41) and the camshaft (44) is rotatable mounted in the housing (41) and interacts with the first pressure chamber (45) over a plunger (46) such that the plunger (46) can be pressed into the first pressure chamber (45) by rotation of the camshaft (44).

10. Hydrostatic overload clutch (40) according to claim 9, wherein the first pressure chamber (45) is further interconnected with the second pressure chamber (52) through a second channel (53), wherein the second channel (53) is provided with an second one-way valve (55) only letting pressure medium into the first pressure chamber (45) and the first channel (54) is provided with an first one-way relief valve (56) adapted to open at a third predetermined threshold pressure and thereby letting pressure medium into the second chamber (52).

11. Hydrostatic overload clutch (40) according to any of the preceding claims 9 -10, wherein the camshaft (44) interacts with the plunger (46) in the second pressure chamber (52).

12. Hydrostatic overload clutch (40) according to any of the preceding claims 9-11, wherein the plunger (46) is a spring loaded plunger adapted to act upon the camshaft (44) with a predetermined force.

13. Hydrostatic overload clutch (40) to any of the preceding claim 9-12, wherein the plunger (46) is provided with a head (47), which is adapted to act upon the camshaft (44), wherein the head (47) is provided as ball or cylinder, which is arranged in the plunger (46) such that it can rotate.

14. Hydrostatic overload clutch (40) according to any of the claims 9-13, wherein the HO-clutch (40) is provided with a plurality of plungers (46) and first pressure chambers (45).
